## Europäisches Patentamt

## European Patent Office

## Office européen des brevets

(11) Veröffentlichungsnummer: **0 141 976**
**B1**

(12) **EUROPÄISCHE PATENTSCHRIFT**

(45) Veröffentlichungstag der Patentschrift:
**03.02.88**

(51) Int. Cl.⁴: **G 01 M 5/00**, G 01 L 5/10

(21) Anmeldenummer: **84111223.8**

(22) Anmeldetag: **20.09.84**

(54) **Verfahren zum Bestimmen der Qualität von Ballschlägern.**

(30) Priorität: **12.10.83 CH 5545/83**

(43) Veröffentlichungstag der Anmeldung:
**22.05.85 Patentblatt 85/21**

(45) Bekanntmachung des Hinweises auf die Patenterteilung:
**03.02.88 Patentblatt 88/5**

(84) Benannte Vertragsstaaten:
**AT BE DE FR GB IT LU NL SE**

(56) Entgegenhaltungen:
**US-A-3 345 861**
**US-A-3 345 862**
**US-A-4 055 999**
**US-A-4 077 256**
**US-A-4 109 520**
**US-A-4 158 962**

(73) Patentinhaber: **Beer, Walter Dr., Märkiweg 22, CH-5200 Brugg (CH)**

(72) Erfinder: **Beer, Walter Dr., Märkiweg 22, CH- 5200 Brugg (CH)**

(74) Vertreter: **Fillinger, Peter, Dr., Rütistrasse 1a, CH-5400 Baden (CH)**

EP 0 141 976 B1

## Beschreibung

Die vorliegende Erfindung bezieht sich auf ein Verfahren zum Bestimmen der Qualität von mit je einem Netz bespannten Ballschlägern, insbesondere Tennisschlägern.

Das Prüfen der Qualität von Tennisschlägern erfolgt heute, wie in der US-A-4 077 256 offenbart, statisch. Für den Prüfvorgang wird der Schläger in einen Apparat eingelegt, worauf ein Stempel auf das Netz gedrückt und dieses um einen bestimmten Betrag verformt wird. Der für diese Verformung aufzubringende hydraulische Druck wird an einem Manometer abgelesen und dient und als Kennzeichen für die Härte des Schlägers. Mit diesem Verfahren wird die heute übliche Kennzahl P/x ermittelt, die das Verhältnis aus einer Kraft (P) und der zugehörigen Auslenkung (x) des Netzes oder des Rahmens darstellt. Diese Kennzahl (auch Federkonstante genannt) gibt das tatsächliche Verhalten eines Schlägers während des Spiels, also seine Qualität wirklichkeitsgetreuer wider als eine andere ebenfalls oft verwendete Kennzahl, nämlich die Spannkraft der Saiten (N), welche nur während des Schlägerbespannens gemessen wird.

Die bekannten Verfahren und die damit ermittelten Kennzahlen haben Nachteile. Geräte zur Bestimmung der sogenannten Federkonstante (Kennzahl P/x) sind vergleichsweise aufwendige und daher schlecht transportierbare Maschinen. Die Bestimmung der Saitenspannkraft (in N) und deren Festhalten als Kenngrösse für das Verhalten eines Tennisschlägers hat den Nachteil, dass sie die Schlägerdimensionen nicht berücksichtigt und somit dem Benutzer nur wenig darüber sagt, wie sich der Schläger beim Spielen verhalten wird.

Der statischen Messung ist zudem der Nachteil eigen, dass sie durch eine Reibung in den Netzknotenpunkten verfälscht sein kann (Dämpfung); ein Nachteil, der jeder statischen Messmethode anhaftet. Diese Messart gibt zudem keine Auskunft über das Wesentlichste, nämlich das dynamische Verhalten der Schlägerbespannung oder des Schlägers beim Schlag, welches die Verweilzeit des Balles auf der Bespannung während des Schlages entscheidend beeinflusst.

Die vorliegende Erfindung stellt sich die Aufgabe, ein Verfahren der eingangs erwähnten Art zu schaffen, mit dem sich eine das dynamische Verhalten eines Ballschlägers (oder eines Teils davon) signalisierende Qualitätskennzahl ermitteln lässt und das es ermöglicht, die Messung mit handlichen und einfach zu bedienenden Geräten auszuführen.

Das erfindungsgemässe Verfahren ist im Anspruch 1 definiert.

Anhand der beiliegenden schematischen Zeichnung wird die Erfindung beispielsweise erläutert. Es zeigen:
Fig. 1 ein Ausführungsbeispiel einer Vorrichtung zur Durchführung des Verfahrens,

Fig. 2 eine graphische Darstellung eines Messergebnisses eines Frequenzganges zur Bestimmung einer charakteristischen Grösse als Qualitätskennzahl für das dynamische Verhalten des in Fig. 1 gezeigten Ballschlägers,
Fig. 3 eine graphische Darstellung eines Messergebnisses eines Phasenganges zur Bestimmung einer charakteristischen Grösse als Qualitätskennzahl für das dynamische Verhalten des in Fig. 1 gezeigten Ballschlägers,
Fig. 4 ein weiteres Vorrichtungsbeispiel zur Durchführung des Verfahrens,
Fig. 5 eine weitere Vorrichtung zur Durchführung des Verfahrens und
Fig. 6 eine graphische Darstellung der Signalfolge bei einer Vorrichtung gemäss Fig. 5.

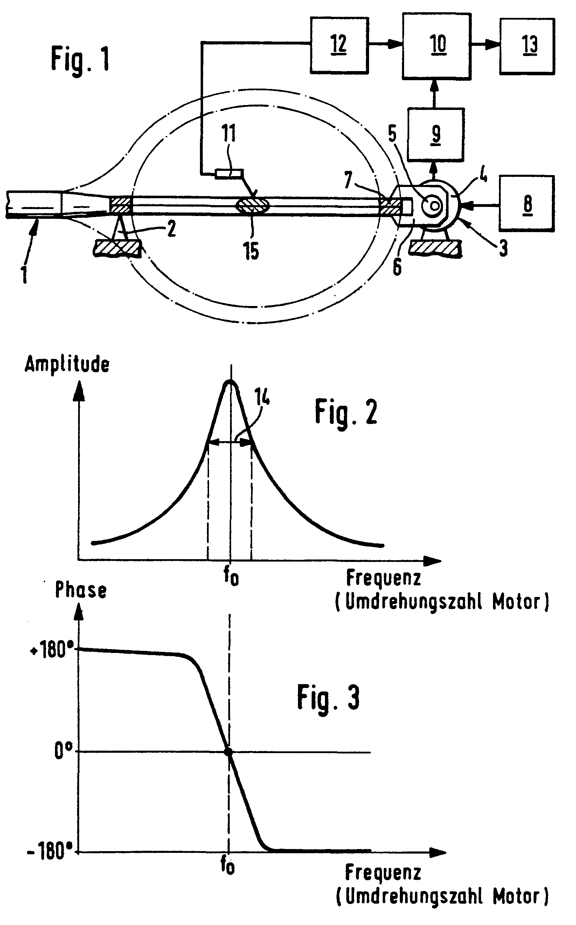

Mit der in Fig. 1 gezeigten Vorrichtung zum Messen der Qualität eines Ballschlägers wird dessen elastisches Verhalten und/oder dessen Dämpfungseigenschaften gemessen. Sie weist ein Auflager 2 für den Tennisschläger 1 sowie einen Schwingungsgenerator 3 auf, der mit einem Elektromotor 4 versehen ist. Auf dessen Antriebswelle sitzt drehfest eine Exzenterscheibe 5. Zum Einkoppeln der Schwingbewegung auf die Bespannung ist auf der kreisförmigen Exzenterscheibe 5 drehbar ein Spannbackenpaar gelagert, das im Rahmen 7 des Tennisschlägers 1 angreift. Mittels eines Variators 8 kann die Drehzahl des Motors und damit die von ihm auf den Tennisschläger 1 erzeugte Schwingungsfrequenz verändert werden. Die Drehzahl des Motors 4 wird weiter von einem Frequenzmeter 9 abgegriffen und einer Vergleichsschaltung 10 zugeleitet. Ein Pickup 11 der Messvorrichtung, das z. B. ein Tonabnehmerkopf eines Wiedergabegerätes für plattenförmige Tonspeicher sein kann, ist in Tastverbindung mit der Bespannung des Tennisschlägers 1. Das Pickup 11 signalisiert die ertastete Schwingungsfrequenz und die Schwingungsamplitude über einen Verstärker 12 ebenfalls an die Steuer- und Vergleichsschaltung 10. Mittels des Spannungsvariators 8 wird während der Messung (wie Fig. 2 zeigt) die Umdrehungszahl des Motors 4 (und damit die dem Tennisschläger 1 eingekoppelte Schwingungsfrequenz) über einen Drehzahlbereich verändert. Sobald der Schwingungsgenerator 3 die der Netzbespannung eigene Resonanzfrequenz $f_0$ durchläuft ertastet das Pickup die grösste Amplitude. Stellt die Steuer- und Vergleichsschaltung 10 die grösste Amplitude fest, signalisiert sie auf einer Digitalanzeige 13 die zugehörige Resonanzfrequenz $f_0$, welche eine Kennzahl für das elastische Verhalten der Netzbespannung während eines Schlages und damit ihrer Qualität darstellt. Die Digitalanzeige 13 kann auch durch einen Drucker, einen Schreiber oder eine Analoganzeige oder dergleichen ersetzt sein. Die beschriebene Vorrichtung kann in problemloser Weise äusserst leicht und raumsparend ausgeführt werden. Es besteht indessen auch die Möglichkeit, die Vergleichs- und Steuerschaltung 10 so zu gestalten, dass sie beim Auftreten einer Resonanzamplitude an der Anzeige 13 die Breite 14 der Resonanz zur Anzeige bringt. Die Breite 14 der Resonanz stellt eine Kenngrösse für die Dämpfungseigenschaften der Schlägerbespannung dar, die ebenfalls ihr Verhalten während eines Ballschlages und damit ihre Qualität charakterisiert.

Um den Einfluss der Masse der Bespannung des Tennisschlägers für die Messung zu verkleinern, kann an jener zusätzlich eine Schwingmasse 15 lösbar befestigt werden. Diese stellt dann die eigentliche Masse des Schwingsystems dar.

Obwohl beim beschriebenen Ausführungsbeispiel der Tennisschläger 1 wowohl mit dem Schwingungsgenerator 3 als auch mit dem Pickup 11 in Berührungsverbindung steht, ist es auch möglich, die Vorrichtung mit einem berührungslosen Schwingungsgenerator und/oder einem berührungslosen Pickup zu gestalten.

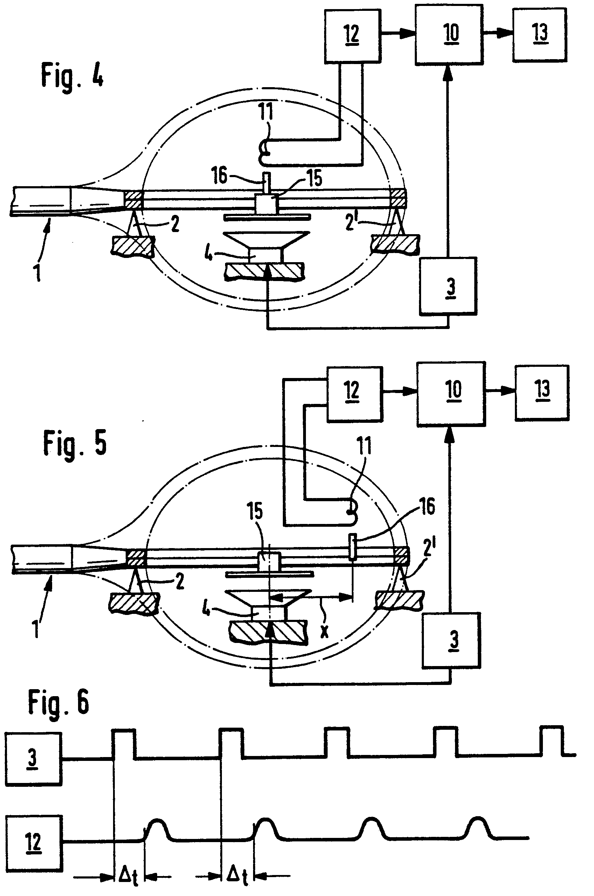

Fig. 4 zeigt ein anderes Beispiel zur Durchführung des mit Bezug auf Fig. 1 beschriebenen Messverfahrens. Jedoch betrifft dieses Beispiel eine Ausführung, wo sowohl Anreger als auch Schwingungsdetektor nicht in Kontakt mit dem Messobjekt stehen, also berührungslos arbeiten. Der Schläger 1 liegt auf 2 Auflagern 2 und 2'. Über einen Lautsprecher 4 wird Energie in Form von Schallwellen auf die schwingende, an der Schlägerbespannung befestigte Masse 15 übertragen. Der Lautsprecher 4 wird durch einen Generator 3 getrieben. Die Bewegung eines an der Masse 15 befestigten Permanentmagnetes 16 wird mittels Induktivitätskopplung durch eine Spule 11 abgegriffen. Das Signal des Generators 3 und das im Verstärker 12 verstärkte Signal werden in der Vergleichsschaltung 10 ausgewertet und mit einem Display digital zur Anzeige gebracht. Durch Ändern der Anregungsfrequenz des Lautsprechers 4 und gleichzeitiges Messen der Signalamplitude des Detektors 11 (Spule) werden, wie im Beispiel zu Fig. 1 erläutert, die Kenngrössen des Schlägers ermittelt und angezeigt. Die Masse 15 mit dem darauf befestigten Permanentmagnet 16 stellt die eigentliche Schwingmasse des Systems dar und ist gegen den Lautsprecher 4 als tellerförmiger Schalldruckaufnehmer gestaltet.

Bei den beschriebenen Ausführungsbeispielen ist es weiter möglich, die Steuer- und Vergleichsschaltung 10 derart zu gestalten, dass sie beim Auftreten der Resonanzfrequenz den Phasengang oder die Steigung des Phasendurchganges am Display 13 zur Anzeige bringt. Dabei ist der Phasennulldurchgang eine Kenngrösse für das elastische Verhalten des Tennisschlägers (Fig. 3) wogegen die Steigung am Ort des Phasennulldurchganges eine Kenngrösse der Dämpfungseigenschaften ist (Reibung im Netz).

Fig. 5. zeigt eine Vorrichtung zur Durchführung des Verfahrens mit der die Signallaufzeit im Netz des Schlägers ebenfalls durch periodisches Einkoppeln von Energie, gemessen wird. Dabei wird im Prizip das gleiche Verfahren angewendet wie im Beispiel nach Fig. 4, jedoch wird der Detektor (Permanentmagnet 16 und Spule 11) im Abstand "x" Lautsprecher 4 (Anreger) bzw. der Schwingmasse 15 entfernt angeordnet. Der Lautsprecher 4 erhält vom Generator 3 ein periodisches Signal, welches über die Masse 15 auf das Netz übertragen wird. Das, bei der Detektorspule 11 empfangene Signal wird über den Verstärker 12 der Vergleichsschaltung 10 zugeführt, wo die Phasenverschiebung der Schwingungssignale aus dem Generator 3 und dem Verstärker 12 verglichen werden.

Fig. 6 zeigt den Verlauf einer solchen Signalfolge. Die Zeitdifferenz $\Delta t$ zwischen den beiden Signalen ist charakteristisch für die Bespannungshärte des Schlägers.

Schwingungsgenerator und Schwingungdetektor können auch in anderer Weise als in den vorgängig beschriebenen Messanordnungen ausgeführt sein. Es kann dabei die Technik der Mechanik, Akkustik, Elektronik, Elektrodynamik, Optik (UV bis IR) und des Elektromagnetismus angewendet werden.

Das vorbeschriebene Verfahren bringen im Unterschied zur statischen Messung den Vorteil, dass die festgestellte Kenngrösse das Verhalten eines Tennisschlägers unter Betriebsbedingungen wesentlich treffender kennzeichnet als die bekannten statisch gemessenen Kennzahlen.

Zudem sind die festgestellten und signalisierten Kennwerte Mittelwerte aus sehr vielen Messungen (Schwingungsperioden) wodurch die festgestellte und signalisierte Kennzahl eine höhere Genauigkeit aufweist als eine in einer statischen Messung ermittelte. Die nach dem vorbeschriebenen Verfahren gemessenen Kennwerte sind ein Mass für die Verweilzeit des Balls in der Bespannung des Tennisschlägers. Abweichungen im Frequenz- oder Phasengang, d.h. unterschiedliche Resonanzfrequenzen, unterschiedliche Breiten der Resonanzen oder unterschiedliche Steigungen der Phasendurchgänge bedeuten unterschiedliche Verweilzeiten des Balles in der Schlägerbespannung und kann damit unterschiedliche Abweichungen von der gewollten Schlagrichtung bewirken. Ein weiterer Vorteil des Verfahrens besteht darin, dass der Schläger während der Messung keiner seine Eigenschaften verändernden Beanspruchung ausgesetzt ist. Weiter eignen sich die ermittelten Kennzahlen zur Errechnung weiterer Parameter wie Saitenspannkraft (N) und dergleichen.

Beim erfindungsgemässen Verfahren ist die Durchführung gegenüber den statischen Verfahren äusserst zeitsparend, weshalb es sich für die Serienmessungen und eine Registrierung und Auswertung der Messresultate eignet.

**Patentansprüche**

1. Verfahren zum Bestimmen der Qualität von mit je einem Netz bespannten Ballschlägern (1), insbesondere Tennisschlägern, dadurch gekennzeichnet, dass am zu untersuchenden Teil des Schlägers eine Schwingmasse (15) befestigt wird, dass das zu untersuchende Teil des Schlägers durch periodisches Einkoppeln von Energie während eines Zeitabschnittes zum Schwingen mit konstanter oder variabler Frequenz angeregt wird, und dass in diesem Teil des Schlägers während des Zeitabschnittes eine charakteristische Grösse der angeregten Schwingung gemessen und als Kennzahl für die Qualität festgehalten wird.

2. Verfahren nach Anspruch 1, dadurch gekennzeichnet, dass eine Schwingung mit variabler Frequenz angeregt und im zu untersuchenden Teil der Frequenz- und/oder Phasengang gemessen, und eine die Form des Frequenz- oder Phasenganges kennzeichnende Grösse als Kennzahl für die Qualität festgehalten wird.

3. Verfahren nach Anspruch 2, dadurch gekennzeichnet, dass als kennzeichnende Grösse die Resonanzfrequenz oder die Breite der Resonanzkurve oder die Steigungen der Phasennulldurchgänge als Kennzahl für die Qualität festgehalten werden.

4. Verfahren nach Anspruch 1, dadurch gekennzeichnet, dass die Ausbreitungsgeschwindigkeit der Schwingung gemessen und als Kennzahl für das elastische Verhalten festgehalten wird.

**Claims**

1. Method for determining the quality of rackets (1) more particularly tennis rackets, strung, in each case, with a netting, characterised in that an oscillating mass (15) is secured to the part of the racket to be investigated, that the part of the racket to be investigated is excited for oscillation with constant or variable frequency by periodic coupling-in of energy during a period of time, and that in this part of the racket, during the period of time, a characteristic quantity of the excited oscillation is measured and retained as a characteristic number for the quality.

2. Method according to claim 1, characterised in that an oscillation with variable frequency is excited and the frequency and/or phase response is measured in the part to be investigated, and a quantity, characterizing the form of the frequency or phase response, is retained as a characteristic number for the quality.

3. Method according to claim 2, characterised in that, as a characteristic quantity, the resonance frequency or the width of the resonance curve or the slopes of the phase zero passages are retained as a characteristic number for the quality.

4. Method according to claim 1, characterised in that the speed of propagation of the oscillation is measured and retained as a characteristic number for the elastic behaviour.

**Revendications**

1. Procédé pour déterminer la qualité de raquettes (1) pourvues d'un réseau de cordes tendues, en particulier de raquettes de tennis, caractérisé en ce que, sur la partie de la raquette à examiner, est fixée une masse (15) oscillante, que l'on provoque, en envoyant périodiquement de l'énergie pendant une certaine période, une vibration avec une fréquence constante ou variable de la partie à examiner de la raquette, et que l'on mesure, dans cette partie de la raquette, pendant la période mentionnée, une grandeur caractéristique de la vibration obtenue, et la retient comme caractéristique de la qualité.

2. Procédé suivant la revendication 1, caractérisé en ce que l'on stimule une vibration à fréquence variable, et mesure, dans la partie à examiner la courbe de fréquence et/ou de phase, et retient, comme caractéristique de la qualité, une grandeur caractérisant la forme de la courbe de fréquence ou de phase.

3. Procédé suivant la revendication 2, caractérisé en ce que l'on retient comme grandeur caractéristique de la qualité, la fréquence de résonance ou la largeur de la courbe de résonance, ou les pentes du passage des phases à zéro.

4. Procédé suivant la revendication 1, caractérisé en ce que l'on mesure la vitesse d'extension de la vibration, et la retient comme caractéristique pour le comportement élastique.

Fig. 1

Amplitude

Fig. 2

$f_0$

Frequenz
(Umdrehungszahl Motor)

Phase

+180°

Fig. 3

0°

-180°

$f_0$

Frequenz
(Umdrehungszahl Motor)

1

Fig. 4

Fig. 5

Fig. 6